Europäisches Patentamt

European Patent Office

Office européen des brevets

(11) Numéro de publication: **0 242 314 B1**

# FASCICULE DE BREVET EUROPEEN

(45) Date de publication de fascicule du brevet: **26.08.92** (51) Int. Cl.⁵: **F24D 19/10**

(21) Numéro de dépôt: **87460008.3**

(22) Date de dépôt: **15.04.87**

(54) **Installation de chauffage central.**

(30) Priorité: **18.04.86 FR 8605748**

(43) Date de publication de la demande:
**21.10.87 Bulletin 87/43**

(45) Mention de la délivrance du brevet:
**26.08.92 Bulletin 92/35**

(84) Etats contractants désignés:
**AT BE CH DE ES GB GR IT LI NL SE**

(56) Documents cités:
**DE-A- 2 749 323**
**DE-B- 2 916 169**

(73) Titulaire: **Société SATEL SA
Route de Saint Brieuc Saint-Gilles
F-35590 L'Hermitage(FR)**

(72) Inventeur: **Simonessa, Claude
22, rue Pierre Texier
F-35760 Montgermont(FR)**

(74) Mandataire: **Le Guen, Louis François
CABINET Louis LE GUEN 38, rue Levavasseur
B.P. 91
F-35802 Dinard Cédex(FR)**

Rank Xerox (UK) Business Services

## Description

La présente invention concerne des installations de chauffage central pour locaux d'habitation comportant en combinaison une boucle à grande inertie et une boucle à faible inertie.

A l'heure actuelle, la construction est assujettie à des normes d'isolation thermique strictes. Ces exigences permettent de prévoir, pour les habitations, des moyens de chauffage dans lesquels le fluide caloporteur est à température modérée. On peut, par exemple, alimenter un plancher chauffant avec de l'eau dont la température est souvent inférieure à 45°C. On atteint des températures de sol de l'ordre de 26°C qui assurent des températures d'ambiance voisines de 20°C.

Outre le fait qu'il offre un confort très satisfaisant, le plancher chauffant à basse température permet l'emploi de générateurs thermiques performants tels que des chaudières à condensation dont le rendement est maximal pour des températures d'eau inférieures à 50°C.

Dans une maison d'habitation, la distribution est souvent faite de telle façon que la partie jour soit au niveau bas ou rez-dechaussée et la partie nuit à l'étage. Un plancher chauffant basse température, qui a une grande inertie, est tout-à-fait adapté à la partie jour à laquelle il assure en permanence une température régulière. De plus, les exigences particulières qu'il nécessite en ce qui concerne la dalle et les revêtements de sol ne sont pas très lourdes.

Par contre, à l'étage, ces exigences sont plus importantes et augmentent nettement le prix de revient. De plus, pour la partie nuit, un plancher chauffant basse température paraît moins adapté que pour la partie jour car il est intéressant de prévoir une possibilité d'intermittence permettant de réduire la température pendant les heures d'inoccupation des locaux et/ou pendant les heures de sommeil.

Donc, pour l'étage ou la partie nuit de la maison, il est préférable de disposer d'un équipement de chauffage à faible inertie, avec des radiateurs, par exemple.

Des installations de chauffage regroupant les deux systèmes précités ont été prévues, mais elles nécessitent deux températures d'eau, l'une entre 40 et 50°C pour le plancher chauffant, l'autre entre 60 et 80°C pour les radiateurs.

On connaît également, par le document DE-A-2 916 169, un dispositif qui comprend une vanne mélangeuse dont une entrée d'eau chaude provient de la chaudière et dont une entrée d'eau froide est reliée à une canalisation de retour de l'installation. Le mélange est contrôlé par un moteur lui-même piloté par une unité de commande. Ce dispositif permet de résoudre le problème du mélange eau chaude/eau froide qui survient lorsqu'on désire utiliser conjointement, sur une même installation, des radiateurs et des planchers chauffants.

D'autres solutions ont été proposées à ce jour. Elles sont cependant toutes onéreuses et comportent des circuits hydrauliques compliqués. De plus, là température de l'eau doit être comprise entre 60°C et 80°C et ne permet pas de bénéficier des performances des générateurs thermiques à haut rendement tels que les chaudières à condensation.

On connaît également le document DE-A-2 749 323 qui décrit un système comportant trois zones identiques équipées de radiateurs et respectivement reliées, d'un côté, à la sortie d'une chaudière et, de l'autre côté, aux entrées de deux vannes à trois voies. La sortie d'une vanne est branchée à une seconde entrée de l'autre et la sortie de cette dernière est reliée à l'entrée de la chaudière. Ce document décrit, en particulier, un système de chauffage qui gère les priorités attribuées à chacune des voies.

Afin de résoudre le problème du mélange eau chaude/eau froide évoqué ci-dessus, on a pensé à réaliser une installation à deux voies, ou boucles, dont l'une est affectée aux planchers de chauffage et l'autre aux radiateurs, un organe de commande gérant les priorités attribuées à chacune de ces boucles.

Le fonctionnement des planchers chauffants qui sont des dispositifs de chauffage à forte inertie peut être interrompu pendant de courts instants. Pendant ceux-ci, il est possible, si besoin est, de chauffer l'eau qui circule dans les radiateurs, qui sont des dispositifs à faible inertie. Une fois les besoins des radiateurs satisfaits, l'eau chaude (à 80°C) en faible quantité des radiateurs peut se mélanger à l'eau plus froide (50°C) en grande quantité des planchers, sans dommages pour ceux-ci.

Ainsi, en prévoyant une installation à deux boucles dont l'une alimente des planchers chauffants et l'autre des radiateurs, et en gérant, par un organe de commande approprié du type de celui décrit dans le document DE-A-2 749 323, la priorité des planchers sur les radiateurs, il est possible de résoudre le problème mentionné ci-dessus.

Les moyens mis en oeuvre pour atteindre la solution qui vient d'être décrite sont définis dans la revendication indépendante complétant la présente description. Les revendications dépendantes décrivent des modes d'exécution préférentiels.

L'invention sera mieux comprise à la lecture de la description suivante d'un exemple de réalisation, ladite description étant faite en relation avec les dessins joints, parmi lesquels:

la Fig. 1 est une vue schématique d'une installation de chauffage selon l'invention, et

la Fig. 2 est une vue schématique d'un circuit électrique commandant le fonctionnement de l'installation de la Fig. 1.

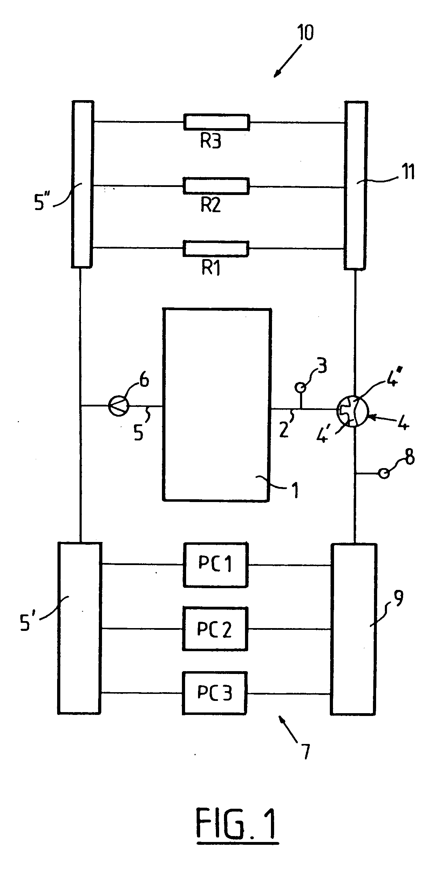

De la chaudière 1, Fig. 1, sort une conduite de départ d'eau 2 munie d'un aquastat 3. A l'extrémité de la conduite 2, se trouve une vanne d'aiguillage à deux voies 4. D'autre part, à la chaudière 1 arrive une conduite de retour d'eau 5 comportant un accélérateur 6.

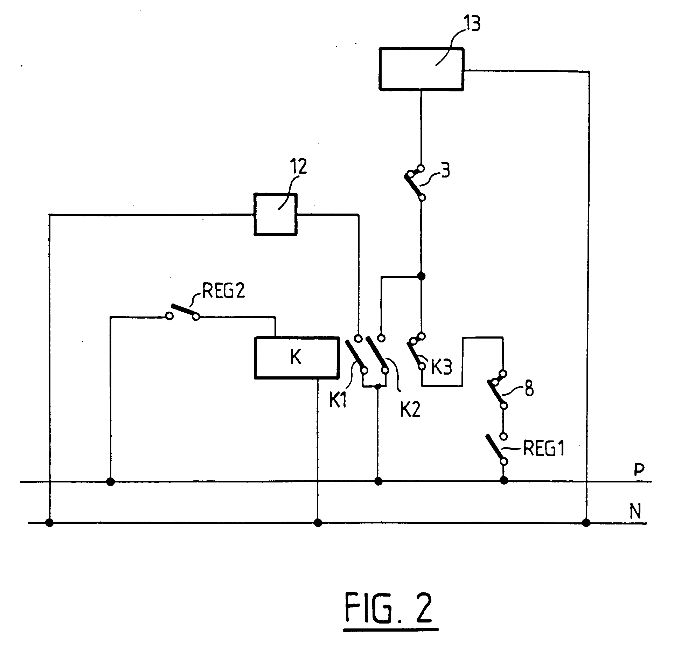

A partir d'une voie 4' de la vanne 4, une boucle 7 est formée, comportant un aquastat 8, un collecteur 9 et, entre le collecteur 9 et un collecteur de retour 5' communiquant avec la conduite 5, une pluralité d'organes de chauffage tels que des plancher chauffants PC1, ..., PCn. A la Fig. 1, on n'a représenté que trois organes de chauffage PC1, PC2 et PC3. De préférence, les organes PC1 à PCn sont montés en parallèle. L'ensemble des organes de chauffage PC1 à PCn comporte un moyen de régulation de température REG1, Fig. 2.

Entre l'autre sortie 4'' de la vanne 4 et un collecteur de retour 5'' communiquant également avec la conduite 5, est prévue une boucle 10 comprenant un collecteur de départ d'eau 11 et une pluralité d'organes de chauffage à faible inertie tels que des radiateurs R1, ..., Rn. A la Fig. 1, ces radiateurs sont au nombre de trois. De préférence, les radiateurs R1 à Rn sont montés en parallèle entre le collecteur 11 et le collecteur de retour 5''.

Les radiateurs R1 à Rn ont une faible capacité d'eau et le volume en eau total de la boucle 10 est nettement inférieur à celui de la boucle 7.

La boucle 10 comporte elle aussi un moyen de régulation de température REG2, Fig. 2.

Le contact du moyen REG2 est monté en série avec un relais K entre le fil de neutre N et le fil de phase P, Fig. 2. Le relais K a deux contacts de travail K1 et K2 et un contact de repos K3. Avec le contact de travail K1, est montée en série entre les fils N et P la commande 12 de la vanne d'aiguillage à deux voies 4. Lorsqu'elle est sous tension, la commande 12 ouvre la vanne 4 sur la voie 4''. Lorsqu'il ne passe pas de courant dans la commande 12, la vanne est ouverte sur sa voie 4'.

Le deuxième contact de travail K2 est monté en série avec l'aquastat 3 de la chaudière 1 et la commande 13 du brûleur entre les fils N et P. La commande 13 et l'aquastat 3 sont également montés en série avec l'aquastat 8 et le moyen REG1, entre les fils N et P. Entre l'aquastat 3, d'une part, et l'aquastat 8 et le moyen REG1, d'autre part, se trouve le contact de repos K3 du relais K.

L'installation selon l'invention fonctionne comme suit. Quand il n'y a pas de demande de la part du moyen de régulation de température REG2 de la seconde boucle 10, le relais K n'est pas alimenté. La commande 12 de la vanne 4 n'est pas sous tension et cette dernière est ouverte sur sa voie 4', vers la boucle 7. Le contact K3 étant fermé, l'aquastat 8 est au travail et limite la température de l'eau dans la boucle à moins de 50°C, par exemple. Ainsi, si la chaudière 1 est une chaudière à condensation, elle fonctionne avec un rendement maximal. Le chauffage de la boucle 7 est régulé par le moyen REG1. En pratique, REG1 est un moyen classique.

S'il y a demande de la part du moyen REG2 de la boucle 10, le contact K1 du relais 4 se ferme. La commande 12 inverse la vanne 4 en l'ouvrant par sa voie 4'' sur la boucle 10. Il n'y a donc plus de circulation d'eau dans la boucle 7. Le contact K2 étant également fermé, la commande de brûleur 13 est activée, tant que la température de l'eau de départ est inférieure à la température de consigne de l'aquastat 3 de la chaudière 1. La température de consigne de l'aquastat 3 est, par exemple, de 80°C. D'autre part, comme le contact de repos K3 est ouvert, il ne passe pas de courant dans l'aquastat 8 et le moyen REG1.

Le volume d'eau dans la boucle 10 est peu important. Ainsi, quand il y a demande de la part du moyen REG2, l'eau arrive rapidement à haute température dans la boucle 10 et les radiateurs R1 à R3 rétablissent rapidement la température de consigne du moyen REG2. Pendant ce temps, il n'y a pas eu de circulation d'eau dans la boucle 7 mais, comme cette boucle a une grande inertie, la baisse de température est très minime.

Quand cesse la demande de calories par le moyen REG1, la circulation d'eau chaude s'arrête dans la boucle 10 et reprend dans la boucle 7, comme on l'a expliqué précédemment. Comme il y a une grande différence de volume en eau entre la boucle 7 et la boucle 10, l'eau de retour de la boucle 10 qui peut être à plus de 50°C se refroidit rapidement au contact de l'eau de la boucle 7, si bien qu'elle ne provoque pas une augmentation de température momentanée importante des planchers chauffants synonyme d'inconfort.

En pratique, dans une maison d'habitation, la boucle 7 peut être utilisée pour chauffer la partie jour et la boucle 10 pour chauffer la partie nuit.

## Revendications

1. Installation de chauffage central comportant:
   - une chaudière (1) dont la conduite de départ d'eau (2) est munie d'un aquastat (3),
   - un collecteur de retour d'eau (5, 5', 5'')
   - une vanne d'aiguillage à deux voies (4),
   - une première boucle (7), avec une premier collecteur de départ (9) comportant un second aquastat (8), entre la première sortie (4') de la vanne (4) et le collecteur de retour (5'), ladite boucle comportant un premier moyen de régulation de température (REG1),

- une seconde boucle (10), avec un second collecteur de départ (11), entre la seconde sortie (4'') de la vanne (4) et le collecteur de retour (5''), comportant un second moyen de régulation de température (REG2) et,

- un moyen de commande K commandé par les aquastats (3) et (8) et les moyens de régulation REG1, REG2, installation dans laquelle:

- la première boucle (7) alimente un dispositif de chauffage à température modérée comportant un ou plusieurs planchers chauffants, et dont le volume d'eau est important pour que son inertie thermique soit forte,

  la seconde boucle (10) alimente un dispositif de chauffage à température plus élevée consistant en des radiateurs à faible inertie thermique et dont le volume d'eau est faible, comparé à celui de la boucle 7, pour que son inertie thermique soit faible, et en ce que,

- l'organe de commande (K) est commandé par le second moyen de régulation de température (REG2), pour commuter la vanne (4) vers la seconde boucle (10) quand il y a demande de la part du second moyen de régulation de température (REG2), et commuter la commande (13) du brûleur de la chaudière (1) sur le premier aquastat (3) dont la température de consigne est supérieure à la température désirée pour la seconde boucle (10), et pour commuter la vanne (4) vers la première boucle (7) quand il n'y a plus de demande de la part du second moyen de régulation de température (REG2), et commuter la commande (13) du brûleur sur le second aquastat (8) et le premier moyen de régulation de température (REG1) de la première boucle (7).

2. Installation de chauffage central selon la revendication 1, caractérisée en ce que, entre la phase (P) et le neutre (N), le contact du second moyen de régulation de température (REG2) est monté en série avec un relais (K) à deux contacts de travail (K1, K2), le premier contact de travail (K1) est monté en série avec la commande (12) de la vanne (4), le second contact de travail (K2) est monté en série avec l'aquastat (3) de la chaudière (1) et la commande (13) du brûleur, ceux-ci étant également montés entre la phase (P) et le neutre (N) en série avec l'aquastat (8) de la première bouche (7) et le contact du premier moyen de régulation de température (REG1).

3. Installation de chauffage central selon la revendication 2, caractérisée en ce que le relais (K) comporte, de plus, un contact de repos (K3) monté avec l'aquastat (8) de la première boucle et le contact du premier moyen de régulation de température (REG1).

4. Installation de chauffage central selon l'une des revendications 1 à 3, caractérisée en ce que la chaudière est une chaudière à condensation.

**Claims**

1. Central heating installation comprising:

- a boiler (1) the water outlet pipe (2) of which is provided with an aquastat (3),
- a water return collector (5, 5', 5''),
- a two way switch valve (4),
- a first loop (7) with a first outlet collector (9) comprising a second aquastat (8) between the first outlet (4') of the valve (4) and the return collector (5'), the said loop comprising a first temperature regulation means (REG1),
- a second loop (10) with a second outlet collector (11) between the second outlet (4'') of the valve (4) and the return collector (5'') comprising a second temperature regulation means (REG2) and
- a control means K controlled by the aquastats (3) and (8) and the regulation means REG1, REG2, an installation in which:
- the first loop (7) feeds a heating apparatus at moderate temperature comprising one or several heating floors and the volume of water of which is considerable in order that its thermal inertia may be high,
- the second loop (10) feeds a heating apparatus with higher temperature consisting of radiators with low thermal inertia and the volume of water is small compared with that of the loop 7 in order that its thermal inertia may be low and in that
- the control member (K) is controlled by the second temperature regulation means (REG2) to switch over the valve (4) to the second loop (10) when there is demand on the part of the second temperature regulation means (REG2) and to switch over the control (13) of the burner of the boiler (1) on the first aquastat (3) the temperature of which is higher than the desired temperature for the second loop (10) and to switch over the valve (4) to the first loop (7) when there is no longer demand on the part of the second temperature regulation means (REG2) and to switch over the control (13) of the burner on the second aquastat (8) and the first temperature regulation means (REG1) of the first loop (7).

2. Central heating installation according to claim 1, characterised in that between the phase (P) and the neutral (N), the contact of the second temperature regulation means (REG2) is mounted in series with a relay (K) with two work contacts (K1, K2), the first work contact (K1) is mounted in series with the control (12) of the valve (4), the second work contact (K2) is mounted in series with the aquastat (3) of the boiler (1) and the control (13) of the burner, these latter likewise being mounted between the phase (P) and the neutral (N) in series with the aquastat (8) of the first loop (7) and the contact of the first temperature regulation means (REG1).

3. Central heating installation according to claim 2, characterised in that the relay (K) comprises in addition a rest contact (K3) mounted with the aquastat (8) of the first loop and the contact of the first temperature regulation means (REG1).

4. Central heating installation according to one of claims 1 to 3, characterised in that the boiler is a condensing boiler.

**Patentansprüche**

1. Zentralheizungsanlage, enthaltend:

   - einen Boiler (1), dessen Wasserauslaßleitung (2) mit einem Wassertemperaturregler (3) versehen ist,
   - einen Wasser-Rücklaufsammler (5, 5', 5"),
   - ein Zwei-Wege-Schaltventil (4),
   - einen ersten geschlossenen Kreis (7) mit einem ersten Auslaßsammler (9), enthaltend einen zweiten Wassertemperaturregler (8) zwischen dem ersten Auslaß (4') des Ventils (4) und dem Rücklaufsammler (5'), wobei der geschlossene Kreis ein erstes Temperatur-Regulierungsmittel (REG1) umfaßt,

   - einen zweiten geschlossenen Kreis (10) mit einem zweiten Auslaßsammler (11) zwischen dem zweiten Auslaß (4") des Ventils (4) und dem Rücklaufsammler (5"), umfassend ein zweites Temperatur-Regulierungsmittel (REG2) und
   - ein Steuermittel K, das von den Wassertemperaturreglern (3) und (8) und den Regulierungsmitteln REG1, REG2 gesteuert wird, wobei in der Anlage
   - der erste geschlossene Kreis (7) ein Heizgerät bei mäßiger Temperatur speist, das eine oder mehrere Heizebenen umfaßt und dessen Wasservolumen beträchtlich ist, so daß seine thermische Trägheit hoch sein kann,
   - der zweite geschlossene Kreis (10) ein Heizgerät mit höherer Temperatur speist, das aus Radiatoren mit geringer thermischer Trägheit besteht und dessen Wasservolumen gering ist, verglichen mit demjenigen des geschlossenen Kreises (7), so daß die thermische Trägheit gering sein kann, und
   - das Steuerorgan (K) durch das zweite Temperatur-Regulierungsmittel (REG2) gesteuert wird, um das Ventil (4) auf den zweiten geschlossenen Kreis (10) umzuschalten, wenn seitens des zweiten Temperatur-Regulierungsmittels (REG2) Bedarf besteht, und um die Steuerung (13) des Brenners des Boilers (1) auf den ersten Wassertemperaturregler (3) umzuschalten, dessen Temperatur höher ist als die gewünschte Temperatur für den zweiten geschlossenen Kreis (10), und um das Ventil (4) auf den ersten geschlossenen Kreis (7) umzuschalten, wenn seitens des zweiten Temperatur-Regulierungsmittels (REG2) kein längerer Bedarf mehr besteht, und um die Steuerung (13) das Brenners auf den zweiten Wassertemperaturregler (8) und auf das erste Temperatur-Regulierungsmittel (REG1) des ersten geschlossenen Kreises (7) umzuschalten.

2. Zentralheizungsanlage nach Anspruch 1, dadurch gekennzeichnet, daß zwischen der Phase (P) und dem Nullpunkt (N) der Kontakt des zweiten Temperatur-Regulierungsmittels (REG2) mit einem Relais (K) mit zwei Arbeitskontakten (K1, K2) in Serie geschaltet ist, wobei der erste Arbeitskontakt (K1) mit der Steuerung (12) des Ventils (4), der zweite Arbeitskontakt (K2) mit dem Wassertemperaturregler (3) des Boilers (1) und der Steuerung (13) des Brenners in Serie geschaltet ist, wobei letztere ebenfalls zwischen der Phase (P) und dem Nullpunkt (N) mit dem Wassertemperaturregler (8) des ersten geschlossenen Kreises (7) und dem Kontakt des ersten Temperatur-Regulierungsmittels (REG1) in Serie geschaltet sind.

3. Zentralheizungsanlage nach Anspruch 2, dadurch gekennzeichnet, daß das Relais (K) zusätzlich einen Ruhekontakt (K3) umfaßt, der mit dem Wassertemperaturregler (8) des ersten geschlossenen Kreises und dem Kontakt des ersten Temperatur-Regulierungsmittels (REG1) zusammengeschaltet ist.

4. Zentralheizungsanlage nach einem der Ansprüche 1 bis 3, dadurch gekennzeichnet, daß der Boiler ein Kondensations-Boiler ist.

FIG. 1

FIG. 2